# EUROPÄISCHE PATENTSCHRIFT

(11) **EP 3 360 504 B1**
(45) Veröffentlichungstag und Bekanntmachung des Hinweises auf die Patenterteilung: **12.12.2018**
(21) Anmeldenummer: 17156340.6
(22) Anmeldetag: 15.02.2017
(51) Int. Cl.: A61C 3/03, A61C 17/02, A61C 17/20

(54) **SCHALLSPITZE FÜR DIE ZAHNMEDIZINISCHE FURKATIONSREINIGUNG**
SONIC LANCE FOR DENTAL FURCATION CLEANING
POINTE À ULTRASONS POUR LE NETTOYAGE DENTAIRE DE FURCATION

(30) Priorität: 09.02.2017 EP 17155501
(43) Veröffentlichungstag der Anmeldung: 15.08.2018
(73) Patentinhaber: Medizinische Hochschule Hannover, 30625 Hannover (DE)
(72) Erfinder: GÜNAY, Hüsamettin, 30625 Hannover (DE)
(74) Vertreter: Taruttis, Stefan Georg

(56) Entgegenhaltungen:
- EP-A2- 1 044 662
- EP-A2- 2 422 738
- EP-B1- 2 617 382
- WO-A1-2008/038307
- US-A- 651 395
- US-A1- 2006 276 816

## Beschreibung

HG-Schallspitze: Die vorliegende Erfindung betrifft eine Schallspitze für die zahnmedizinische Furkationsreinigung, die mit einem Handstück mit Schallerzeuger oder Ultraschallerzeuger verbunden werden kann. Die Schallspitze ist für die Reinigung von Furkationen von z.B. mehrwurzeligen Zähnen angepasst und eignet sich insbesondere zur Verwendung als zahnmedizinisches Reinigungsgerät und/oder Glättungsgerät für den Zahnwurzelbereich, bzw. für die Reinigung des Zahnwurzelbereichs von harten und weichen Belägen und/oder zu dessen Glättung.

### Stand der Technik

Die EP 2 617 382 B1 zeigt eine zahnmedizinische Kürette zur Entfernung von Ablagerungen auf Zähnen und weist eine endständige Öse mit umlaufender Schneidkante auf und kann mit einem Handstück mit Schallerzeuger verbunden werden.

Die US 2006/0276816 A1 beschreibt eine Kürette zur Wirbelsäulenchirurgie mit einem Endabschnitt, der bei manueller Drehung Gewebe aus Höhlungen schneiden soll.

Die EP 1 044 662 A2 beschreibt zahnmedizinische Schallspitzen zur Reinigung, die aus kohlefaserverstärktem Kunststoff bestehen und eine Form aufweisen können, die kegelförmig zuläuft oder endständig knospenförmig einen etwa ovalem Querschnitt haben kann.

Die EP 2 422 738 A2 beschreibt zahnmedizinische Schallspitzen, die konisch zulaufen und am Handstück zusätzlich zu einer koaxialen Stellung in einer um 90° geschwenkten Stellung festgelegt werden können.

Es ist bekannt, Schallspitzen mit einer Beschichtung aus abrasivem Material, z.B. mit Diamamtpartikeln, zu versehen.

### Aufgabe der Erfindung

Die Aufgabe der Erfindung liegt in der Bereitstellung einer alternativen zahnmedizinischen Schallspitze, die bevorzugt für die Reinigung von Furkationen im Zahnwurzelbereich angepasst ist. Weiter bevorzugt soll die Schallspitze das Abtragen von weichen und festen Belägen erlauben und eine möglichst atraumatische Behandlung ermöglichen.

### Beschreibung der Erfindung

Die Erfindung löst die Aufgabe mit den Merkmalen der Ansprüche, insbesondere mit einer zahnmedizinischen Schallspitze, deren Endabschnitt zumindest 4, bevorzugter zumindest 6, bevorzugter 6 bis 8 Stege aufweist, die durch Ausnehmungen voneinander beabstandet sind. Die Stege weisen Außenflächen auf, die in einer gemeinsamen gebogenen Ebene angeordnet sind, die bevorzugt einen kreisförmigen oder elliptischen Querschnitt hat und in sich geschlossen ist. Der Querschnitt der Ebene, in der die Außenflächen der Stege angeordnet sind, liegt senkrecht zur Längsachse des endständigen Abschnitts. Der Endabschnitt ist an einem Träger angebracht, vorzugsweise einstückig mit dem Träger ausgebildet, der am gegenüberliegenden Ende mit einem Handstück mit Schallerzeuger befestigt werden kann. Der Träger ist bevorzugt gebogen und in einem Abschnitt, der unmittelbar an den Endabschnitt angrenzt, bevorzugt grade und weist mit dem Endabschnitt eine gemeinsame Längsachse auf.

Die Ausnehmungen sind durch die Seitenflächen der Stege begrenzt. Die Seitenflächen der Stege können plan sein oder konkav, so dass die Ausnehmungen einen ellipsenförmigen Querschnitt haben. Die Seitenflächen erstrecken sich bevorzugt radial zur Längsachse des endständigen Abschnitts oder in einem Winkel von 60° bis 90° zur angrenzenden Außenfläche des Stegs.

Die Stege können jeweils ihre Außenfläche in einer Breite aufweisen, die z.B. 50% bis 200%, bevorzugt 50% bis 150%, bevorzugter 100 %, der Breite einer Ausnehmung beträgt. Bevorzugt weisen die Stege in einem axialen Abschnitt des Endabschnitts jeweils dieselbe Breite auf und denselben Abstand voneinander. Generell bevorzugt sind die Mittelachsen der Außenflächen der Stege zueinander parallel und/oder im gleichen Abstand voneinander angeordnet.

Die Kanten, an denen die Außenflächen der Stege an ihre Seitenflächen stoßen, liegen daher in der gemeinsamen gebogenen Ebene und überragen diese Ebene nicht. Dadurch wird erreicht, dass die Kanten im Wesentlichen nicht oder nur geringfügig gegen eine Zahnfläche wirken, gegen die der Endabschnitt gedrückt wird, sondern dass die Kanten im Wesentlichen gegen Beläge wirken, die auf der Zahnfläche sitzen.

Erfindungsgemäß bevorzugt sind die Außenflächen des Endabschnitts, bevorzugt die vollständige Schallspitze, glatt und weisen insbesondere keine raue Beschichtung auf, z.B. keine Beschichtung mit abrasivem Material, z.B. keine Diamantbeschichtung. Denn es hat sich gezeigt, dass die Kanten der Stege eine effektive und für den Zahn schonende Abtragung von Belägen erlauben, wenn die Außenflächen der Stege in einer gemeinsamen, gebogenen Ebene liegen und nicht mit abrasivem Material beschichtet sind, sondern glatte Flächen sind, insbesondere glatte Metallflächen, z.B. polierte Metallflächen. Optional und wenig bevorzugt können die Außenflächen mit einem abrasiven Material beschichtet sein, z.B. Diamant mit einer Körnung von 15 bis 25 µm.

Bevorzugt sind die Stege und/oder die Seitenflächen parallel zur Längsachse des Endabschnitts angeordnet, so dass sich die Stege und ihre Seitenflächen entlang des Endabschnitts erstrecken. Alternativ oder zusätzlich können die Stege und/oder die Seitenflächen senkrecht oder in einem Winkel zwischen senkrecht und parallel zur Längsachse des Endabschnitts angeordnet sein. Wenn die Stege alternativ zu einer Anordnung parallel zur Längsachse senkrecht oder in einem Winkel zwischen senkrecht und parallel zur Längsachse angeordnet sind, erstrecken sich die Stege kreisscheibenförmig oder schraubenlinienförmig entlang des Endabschnitts. Wenn die Stege parallel zur Längsachse angeordnet sind und zusätzlich Seitenflächen aufweisen, die senkrecht oder in einem Winkel zwischen senkrecht und parallel zur Längsachse angeordnet sind, sind die längs des Endabschnitts verlaufenden Stege zusätzlich kreisscheibenförmig oder schraubenlinienförmig durch zusätzliche Seitenflächen unterbrochen und sind z.B. unterbrochene und längs der Längsachse des endständigen Abschnitts verlaufende Stege.

Bevorzugt besteht die Schallspitze aus Metall, insbesondere hochlegiertem Stahl, und ist bevorzugt einstückig. Die Ausnehmungen können z.B. gegossen sein, bevorzugt gefräst oder erodiert sein. Bevorzugt weist die Schallspitze keine Beschichtung auf, sondern besteht einstückig aus Metall.

Der Endabschnitt ist bevorzugt von einer gemeinsamen gebogenen Ebene umfasst, die zylindrisch ist, kegelförmig zu ihrem Ende zuläuft oder einen kreisförmigen oder ovalen Querschnitt in seiner Längsachse aufweist, bevorzugt mit einem gerundeten Abschluß. Der Endabschnitt kann z.B. in einem Winkel von max. 70° zulaufen, bevorzugt in einem Winkel von 20° bis 45°, z.B. 30° bis 40° oder bis 35°, gemessen in einem Abstand von 1/3 der Länge des Endabschnitts entlang der Längsachse ausgehend vom Ende des Endabschnitts gegenüber dem Träger, um einen gerundeten Abschluß zu bilden.

Bevorzugt weist der Endabschnitt in seiner Längsachse einen Querschnitt auf, der kreisförmig ist oder bevorzugter elliptisch ist und einen größeren maximalen Querschnitt senkrecht zur Längsachse größer als der unmittelbar angrenzende Abschnitt des Trägers. Ein parallel zur Längsachse elliptischer Querschnitt des Endabschnitts kann symmetrisch sein oder asymmetrisch sein, z.B. wie ein Vogelei oder knospenförmig, z.B. einen kleineren oder größeren Radius in dem Abschnitt haben, der das Ende des Endabschnitts bildet, als in dem Abschnitt zwischen diesem und dem angrenzenden Träger.

Der Endabschnitt weist bevorzugt einen Querschnitt senkrecht zur Längsachse mit einem maximalen Durchmesser von 0,8 bis 1,4 mm, bevorzugter von 1 bis 1,2 mm auf. Der Endabschnitt kann sich z.B. angrenzend an den Träger entlang der Längsachse über 1,8 bis 2,2 mm erstrecken.

Der Träger kann einen längsverlaufenden Kanal, z.B. zumindest abschnittsweise als Bohrung und/oder zumindest abschnittsweise als Nut ausgebildet, aufweisen, der als Kanal für Wasser dient. Der als Bohrung ausgebildete Abschnitt des Kanals ist vorzugsweise koaxial im Träger angeordnet, insbesondere in den Abschnitten, in denen der Träger grade ist. Alternativ kann der längs des Trägers verlaufende Kanal vollständig als Bohrung oder als Nut ausgebildet sein. Ein solcher längsverlaufender Kanal, insbesondere in den Abschnitten, in denen er als Nut ausgebildet ist, ist bevorzugt in dem Bereich der Innenseite der Biegung des Trägers angeordnet.

Vorliegend umfasst der Schall, der mittels eines Handstücks erzeugt und auf die Schallspitze aufgebracht werden kann, bevorzugt Frequenzen im Bereich von 6000 bis 32000 Hz, z.B. von 6000 bis 11000 oder bis 8000 Hz, insbesondere Frequenzen des Schallbereichs von 6000 bis 8000 Hz und/oder des Ultraschallbereichs von 25000 bis 30000 Hz.

Die Erfindung wird nun genauer mit Bezug auf die Figuren beschrieben, die in
- Figur 1 eine Ausführungsform der Schallspitze,
- Figur 2 eine bevorzugte Ausführungsform des Endabschnitts der Schallspitze und in
- Figur 3 einen Querschnitt des Endabschnitts einer bevorzugten Ausführungsform der Schallspitze zeigen.

In den Figuren bezeichnen gleiche Bezugsziffer funktionsgleiche Elemente.

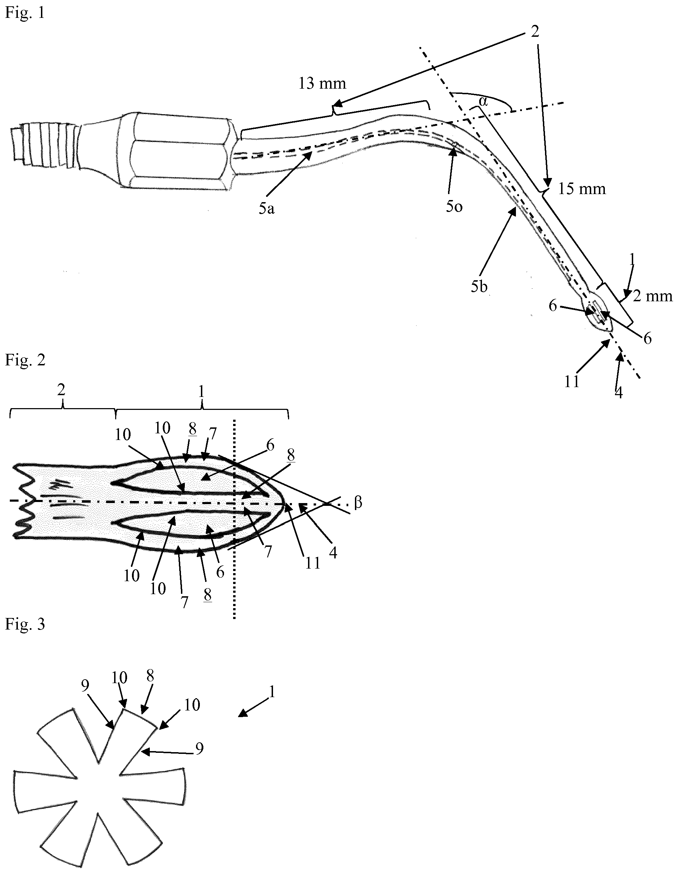

Die Figur 1 zeigt eine erfindungsgemäße Schallspitze mit einem Endabschnitt 1, der einstückig mit einem Träger 2 ausgebildet ist, an dessen gegenüberliegendem Ende ein Anschlußstück 3 angebracht ist, das an einem Handstück mit Schallerzeuger befestigt werden kann. Der Träger 2 ist gebogen und in dem Schenkelbereich grade, der an den Endabschnitt angrenzt, so dass der Endabschnitt 1 und der Träger 2 eine gemeinsame Längsachse 4 aufweisen, die entsprechend der bevorzugten Ausführungsform grade ist. Längs des Trägers 2 ist ein Kanal 5a, 5b zur Wasserführung angeordnet, der in einem Abschnitt als Bohrung 5a (doppelt gestrichelt) im Träger 2 ausgebildet sein kann und im Anschluß an die Biegung als offener Kanal 5b (einfach gestrichelt) auf der Innenseite des gebogenen Trägers 2 angeordnet sein kann. Der Kanal 5a, 5b ist bevorzugt in einer Symmetrieebene des Trägers 2 angeordnet. Der Kanal 5a, 5b mündet bevorzugt vor dem Endabschnitt 1, z.B. in einem Abstand von 1 bis 5 mm vom Endabschnitt. Dabei kann die Bohrung 5a im Schenkelbereich der Innenseite der Biegung des Trägers 2 in einer Wasserführungsöffnung 5o münden und die Verbindung mit dem offenen Kanal 5b bilden. Der offene Kanal 5b ist längs des Trägers 2 offen, insbesondere auf der Innenseite des gebogenen Trägers 2, z.B. als Nut im Träger 2. Die Figur 1 zeigt beispielhaft bevorzugte Größen der Schenkelbereiche des gebogenen Trägers 2 von 13 mm und 15 mm der beiden Schenkelbereiche, die durch die Biegung verbunden sind, und des Endabschnitts 1 von 2 mm. Die Biegung des Trägers 2 zwischen den beiden Schenkelbereichen kann z.B. einen Winkel α von 110° bis 140° bilden.

Der Endabschnitt 1 hat einen elliptischen Querschnitt entlang der Längsachse 4 und senkrecht zur Längsachse 4 einen runden Querschnitt, dessen Durchmesser sich entlang der Längsachse 4 mit dem elliptischen Querschnitt ändert. Der Endabschnitt 4 zeigt in dieser Ansicht schematisch 2 Ausnehmungen, die sich nur parallel zur Längsachse 4 erstrecken.

Die Figur 2 zeigt einen Endabschnitt 1 in Aufsicht auf seine Längsachse 4 mit dem angrenzenden Träger 2. Der Endabschnitt weist in der Aufsicht 2, insgesamt 4, Ausnehmungen 6 auf, die eine gleiche Anzahl von Stegen 7 beabstanden. Die Ausnehmungen 6 und die Stege 7 sind parallel zur Längsachse 4 angeordnet. Die Ausnehmungen 6 haben einen konischen oder elliptischen Querschnitt senkrecht zur Längsachse. Der Endabschnitt 1 läuft auf seinen gerundeten Abschluß 11 in einem Winkel β von ca. 30 bis 45° zu, der bei 1/3 der Länge des Endabschnitts 1 entlang seiner Längsachse 4, angedeutet durch die gestrichelte Linie, gemessen wird.

Die Schallspitze ist einstückig aus Edelstahl, insbesondere hochlegiertem Stahl, hergestellt, wobei die Ausnehmungen 6 in den Endabschnitt 1 eingefräst wurden.

Die Figur 3 zeigt den Querschnitt des Endabschnitts 1 senkrecht zur Längsachse im Bereich seines größten Durchmessers. Die Querschnittsansicht macht deutlich, dass die Außenflächen 8 der Stege 7 in einer gemeinsamen gebogenen Ebene liegen, die hier im Querschnitt kreisförmig ist und eine Umhüllende bildet, in der die Außenflächen liegen. Die Außenflächen 8 bilden mit den Seitenflächen 9 die Kanten 10. Die Kanten 10 überragen die Außenflächen 8 nicht, sondern liegen in der gemeinsamen gebogenen Ebene, in der die Außenflächen liegen.

### Bezugszeichenliste:

1 Endabschnitt
2 Träger
3 Anschlußstück
4 Längsachse
5a, 5b Kanal zur Wasserführung
5o Wasserführungsöffnung im Kanal
6 Ausnehmung
7 Steg
8 Außenfläche
9 Seitenfläche
10 Kante
11 Abschluß

## Patentansprüche

1. Zahnmedizinische Schallspitze mit einem Träger (2), dessen eines Ende an ein Handstück mit Schallerzeuger anschließbar ist und an dessen gegenüberliegendem Ende ein Endabschnitt (1) angeordnet ist, **dadurch gekennzeichnet, dass** der Endabschnitt (1) zumindest 4 Stege (7) aufweist, die durch Ausnehmungen (6) voneinander beabstandet sind, wobei die Stege (7) Außenflächen (8) aufweisen, die in einer gemeinsamen gebogenen Ebene angeordnet sind und der Endabschnitt (1) senkrecht zu seiner Längsachse (4) einen maximalen Durchmesser von 1,4 mm aufweist.

2. Schallspitze nach Anspruch 1, **dadurch gekennzeichnet, dass** die Stege (7) parallel zur Längsachse (4) des Endabschnitts (1) angeordnet sind und/oder die Stege (7) in einem Winkel zur Längsachse (4) des Endabschnitts (1) angeordnet sind, der sich zwischen der Senkrechten und der Parallelen zur Längsachse (4) erstreckt.

3. Schallspitze nach einem der voranstehenden Ansprüche, **dadurch gekennzeichnet, dass** die Seitenflächen (9) der Stege (7), die die Ausnehmungen (6) begrenzen, sich radial zur Längsachse (4) des Endabschnitts (1) oder in einem Winkel von 60° bis 90° zur angrenzenden Außenfläche (8) erstrecken.

4. Schallspitze nach einem der voranstehenden Ansprüche, **dadurch gekennzeichnet, dass** die Außenflächen (8) jeweils eine Breite von 50 bis 200% der Breite einer Ausnehmung (6) aufweisen.

5. Schallspitze nach einem der voranstehenden Ansprüche, **dadurch gekennzeichnet, dass** der Endabschnitt (1) zumindest 6 Stege (7) aufweist.

6. Schallspitze nach einem der voranstehenden Ansprüche, **dadurch gekennzeichnet, dass** der Endabschnitt (1) in seiner Längsachse (4) einen kreisförmigen oder einen symmetrischen oder asymmetrischen elliptischen Querschnitt aufweist.

7. Schallspitze nach einem der voranstehenden Ansprüche, **dadurch gekennzeichnet, dass** der Endabschnitt (1) entlang seiner Längsachse (4) zylindrisch ist oder kegelförmig zu seinem Abschluß zuläuft.

8. Schallspitze nach einem der voranstehenden Ansprüche, **dadurch gekennzeichnet, dass** der Endabschnitt (1) senkrecht zu seiner Längsachse (4) eine maximalen Durchmesser von 0,8 mm aufweist.

9. Schallspitze nach einem der voranstehenden Ansprüche, **dadurch gekennzeichnet, dass** der Endabschnitt (1) sich entlang seiner Längsachse (4) über 1,8 bis 2,2 mm erstreckt.

10. Schallspitze nach einem der voranstehenden Ansprüche, **dadurch gekennzeichnet, dass** der Träger (2) gebogen ist und in seinem an den Endabschnitt (1) angrenzenden Schenkelbereich mit dem Endabschnitt (1) auf einer gemeinsamen Längsachse (4) liegt.

11. Schallspitze nach einem der voranstehenden Ansprüche, **dadurch gekennzeichnet, dass** die gemeinsame gebogene Ebene senkrecht zur Längsachse (4) des Endabschnitts (1) einen kreisförmigen Querschnitt aufweist.

12. Schallspitze nach einem der voranstehenden Ansprüche, **dadurch gekennzeichnet, dass** sie einstückig ist und keine Beschichtung aufweist.

13. Schallspitze nach einem der voranstehenden Ansprüche, **dadurch gekennzeichnet, dass** die Außenflächen (8) polierte Metallflächen sind.

14. Schallspitze nach einem der Ansprüche 1 bis 11, **dadurch gekennzeichnet, dass** die Außenflächen (8) eine abrasive Beschichtung aufweisen.

15. Schallspitze nach einem der voranstehenden Ansprüche, **dadurch gekennzeichnet, dass** der Endabschnitt (1) in einem Winkel von max. 70° zuläuft, gemessen in einem Abstand von 1/3 der Länge des Endabschnitts entlang der Längsachse ausgehend vom Ende des Endabschnitts (1) gegenüber dem Träger (2).

## Claims

1. Dental sonic tip having a carrier (2), one end of which is connectable to a hand piece having a sound generator and at the opposite end of which a terminal section (1) is arranged, **characterized in that** the terminal section (1) has at least 4 bridges (7) which are spaced from one another by recesses (6), wherein the bridges (7) have outside surfaces (8) which are arranged in a common arcuate plane and wherein the terminal section (1) in perpendicular to its longitudinal axis (4) has a maximum diameter of 1.4 mm.

2. Sonic tip according to claim 1, **characterized in that** the bridges (7) are arranged in parallel to the longitudinal axis (4) of the terminal section (1) and/or the bridges (7) are arranged in an angle to the longitudinal axis (4) of the terminal section (1) which extends between the perpendicular and the parallel of the longitudinal axis (4).

3. Sonic tip according to one of the preceding claims, **characterized in that** the side surfaces (9) of the bridges (7) which delimit the recesses (7) extend radially to the longitudinal axis (4) of the terminal section (1) or in an angle of 60 ° to 90 ° in relation to the adjacent outside surface (8).

4. Sonic tip according to one of the preceding claims, **characterized in that** the outside surfaces (8) have a width of 50 to 200% of the width of a recess (6).

5. Sonic tip according to one of the preceding claims, **characterized in that** the terminal section (1) has at least 6 bridges (7).

6. Sonic tip according to one of the preceding claims, **characterized in that** the terminal section (1) along its longitudinal axis (4) as a circle-shaped or a symmetric or asymmetric elliptic cross-section.

7. Sonic tip according to one of the preceding claims, **characterized in that** the terminal section (1) along its longitudinal axis (4) is cylindrical or tapers cone-shaped towards its terminus.

8. Sonic tip according to one of the preceding claims, **characterized in that** the terminal section (1) in perpendicular to its longitudinal axis (4) has a maximum diameter of 0.8 mm.

9. Sonic tip according to one of the preceding claims, **characterized in that** the terminal section (1) along its longitudinal axis (4) extends for 1.8 to 2.2 mm.

10. Sonic tip according to one of the preceding claims, **characterized in that** the carrier (2) is arched and in its leg section adjacent to its terminal section (1) lies on a common longitudinal axis (4) with the terminal section (1).

11. Sonic tip according to one of the preceding claims, **characterized in that** the common arcuate plane in perpendicular to the longitudinal axis (4) of the terminal section (1) has a circle-shaped cross-section.

12. Sonic tip according to one of the preceding claims, **characterized in that** it is one-pieced and has no coating.

13. Sonic tip according to one of the preceding claims, **characterized in that** the outside surfaces (8) are polished metal surfaces.

14. Sonic tip according to one of claims 1 to 11, **characterized in that** the outside surfaces (8) have an abrasive coating.

15. Sonic tip according to one of the preceding claims, **characterized in that** the terminal section (1) tapers in an angle of at maximum 70 °, measured at a distance of 1/3 of the length of the terminal section along the longitudinal axis, starting from the end of the terminal section (1) opposite of the carrier (2).

## Revendications

1. Pointe sonique dentaire avec support (2), dont une extrémité est connectable à une pièce à main avec générateur de son et à son extrémité opposée est disposée une partie terminale (1), **caractérisée en ce que** la partie terminale (1) comporte au moins 4 barres (7) qui sont espacées par des évidements (6), les barres (7) ayant des surfaces extérieures (8) disposées dans un même plan incurvé et la section d'extrémité (1) perpendiculaire à son axe longitudinal (4) ayant un diamètre maximal de 1,4 mm.

2. Pointe sonique selon la revendication 1, **caractérisée en ce que** les barres (7) sont agencées parallèles à l'axe longitudinal (4) de la partie terminale (1) et/ou que les barres (7) forment un angle avec l'axe longitudinal (4) de la partie terminale (1) qui s'étend entre la verticale et la parallèle à l'axe longitudinal (4).

3. Pointe sonique selon l'une des revendications précédentes, **caractérisée en ce que** les surfaces latérales (9) des barres (7) délimitant les évidements (6), s'étendent radialement par rapport à l'axe longitudinal (4) de la partie terminale (1) ou à un angle de 60° à 90° par rapport à la surface extérieure limitrophe (8).

4. Pointe sonique selon l'une des revendications précédentes, **caractérisée en ce que** les surfaces extérieures (8) ont chacune une largeur correspondant de 50 à 200% de la largeur d'un évidement (6).

5. Pointe sonique selon l'une des revendications précédentes, **caractérisée en ce que** la partie terminale (1) présente au moins 6 barres (7).

6. Pointe sonique selon l'une des revendications précédentes, **caractérisée en ce que** la partie terminale (1) présente dans son axe longitudinal (4) une section transversale circulaire ou elliptique symétrique ou asymétrique.

7. Pointe sonique selon l'une des revendications précédentes, **caractérisée en ce que** la partie terminale (1) le long de son axe longitudinal (4) est cylindrique ou conique jusqu'à son terme.

8. Pointe sonique selon l'une des revendications précédentes, **caractérisée en ce que** la partie terminale (1) perpendiculaire à son axe longitudinal (4) a un diamètre maximal de 0,8 mm.

9. Pointe sonique selon l'une des revendications précédentes, **caractérisée en ce que** la partie terminale (1) s'étend le long de son axe longitudinal (4) sur 1,8 à 2,2 mm.

10. Pointe sonique selon l'une des revendications précédentes, **caractérisée en ce que** le support (2) est incurvé et se situe dans sa région angulaire limitrophe de la partie terminale (1), avec la partie terminale (1) sur un axe longitudinal commun (4).

11. Pointe sonique selon l'une des revendications précédentes, **caractérisée en ce que** le plan incurvé commun présente une section transversale circulaire, perpendiculaire à l'axe longitudinal (4) de la partie terminale (1).

12. Pointe sonique selon l'une des revendications précédentes, **caractérisée en ce qu'**elle est monobloc et sans revêtement.

13. Pointe sonique selon l'une des revendications précédentes, **caractérisée en ce que** les surfaces extérieures (8) sont des surfaces métalliques polies.

14. Pointe sonique selon l'une des revendications 1 à 11, **caractérisée en ce que** les surfaces extérieures (8) présentent un revêtement abrasif.

15. Pointe sonique selon l'une des revendications précédentes, **caractérisée en ce que** la partie terminale (1) forme un angle de max. 70°, mesuré à une distance de 1/3 de la longueur de la partie terminale le long de l'axe longitudinal, à partir de l'extrémité de la partie terminale (1) par rapport au support (2).
